# EUROPÄISCHE PATENTSCHRIFT

(11) **EP 2 801 841 B1**
(45) Veröffentlichungstag und Bekanntmachung des Hinweises auf die Patenterteilung: **04.07.2018**
(21) Anmeldenummer: 13167256.0
(22) Anmeldetag: 10.05.2013
(51) Int. Cl.: G01C 15/00, G01S 17/06, G01S 17/66

(54) **Lasertracker mit einer Zielerfassungseinheit für eine Zielverfolgung und eine Orientierungserkennung**
Laser tracker with a target detecting unit for a target tracking system and orientation detection
Appareil de suivi laser comprenant une unité d'enregistrement d'une cible pour le pistage d'une cible et une détection d'orientation

(43) Veröffentlichungstag der Anmeldung: 12.11.2014
(73) Patentinhaber: Leica Geosystems AG, 9435 Heerbrugg (CH)
(72) Erfinder: Böckem, Burkhard, 5415 Rieden (CH)
(74) Vertreter: Kaminski Harmann

(56) Entgegenhaltungen:
- EP-A2- 2 071 283
- WO-A1-97/14015
- US-A1- 2012 236 320
- US-B1- 7 800 758
- "Leica Absolute Tracker AT901", , 1. November 2010 (2010-11-01), XP55047153, Gefunden im Internet: URL:http://www.leica-geosystems.de/downloa ds123/m1/metrology/general/brochures/Leica Absolute Tracker AT901 brochure_en.pdf [gefunden am 2012-12-07]

## Beschreibung

Die vorliegende Erfindung betrifft einen Lasertracker sowie ein Verfahren zur Positionsbestimmung und fortlaufenden Verfolgung eines Messhilfsinstruments.

Messvorrichtungen, die für eine fortlaufende Verfolgung eines Zielpunkts und eine koordinative Positionsbestimmung dieses Punkts ausgebildet sind, können allgemein, insbesondere im Zusammenhang mit der industriellen Vermessung, unter dem Begriff Lasertracker zusammengefasst werden. Ein Zielpunkt kann dabei durch eine retro-reflektierende Einheit (z. B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z. B. mittels Laufzeit- oder Phasendifferenzmessung ermittelt.

Lasertracker nach dem Stand der Technik können zusätzlich mit einer optischen Bilderfassungseinheit mit einem zweidimensionalen, lichtempfindlichen Array, z. B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera können dabei insbesondere derart aufeinander montiert sein, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Weiters kann die Kamera - z. B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines sogenannten Messhilfsinstruments mit Markierungen, deren relative Lage zueinander bekannt ist, kann auf eine Orientierung eines an dem Messhilfsinstrument angeordneten Objekts (z. B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Derartige Messhilfsinstrumente können durch sogenannte Tastwerkzeuge, die mit ihrem Kontaktpunkt auf einem Punkt des Zielobjektes positioniert werden, verkörpert sein. Das Tastwerkzeug weist Markierungen, z. B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Zur Entfernungsmessung weisen Lasertracker des Standes der Technik zumindest einen Distanzmesser auf, wobei dieser z. B. als Interferometer ausgebildet sein kann. Da solche Entfernungsmesseinheiten nur relative Distanzänderungen messen können, werden in heutigen Lasertrackern zusätzlich zu Interferometern sogenannte Absolutdistanzmesser verbaut. Beispielsweise ist eine derartige Kombination von Messmitteln zur Entfernungsbestimmung durch das Produkt AT901 der Leica Geosystems AG bekannt. Die in diesem Zusammenhang für die Distanzmessung eingesetzten Interferometer verwenden hauptsächlich - aufgrund der grossen Kohärenzlänge und der damit ermöglichten Messreichweite - als Lichtquellen Helium-Neon-Gaslaser (HeNe-Laser). Eine Kombination eines Absolutdistanzmessers und eines Interferometers zur Entfernungsbestimmung mit einem HeNe-Laser ist beispielsweise aus der WO 2007/079600 A1 bekannt.

Ausserdem wird in modernen Trackersystemen - zunehmend standardisiert - auf einem Sensor eine Ablage des empfangenen Messstrahls von einer Nullposition ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Lasertracker nach dem Stand der Technik weisen für eine fortlaufende Zielverfolgung regelmässig einen Tracking-Flächensensor in Form eines positionssensitiven Detektors (PSD) auf, wobei am Ziel reflektierte Messlaserstrahlung auf diesem detektiert werden kann. Als PSD ist in diesem Zusammenhang ein örtlich analog arbeitender Flächensensor zu verstehen, mit welchem ein Schwerpunkt einer Lichtverteilung auf der Sensorfläche bestimmt werden kann. Das Ausgangssignal des Sensors wird dabei vermittels einer oder mehrerer photosensitiver Flächen erzeugt und hängt von der jeweiligen Position des Licht-Schwerpunkts ab. Mittels einer nachgeschalteten oder integrierten Elektronik kann das Ausgangssignal ausgewertet werden und der Schwerpunkt ermittelt werden. Die Ermittlung der Position des Schwerpunkts des auftreffenden Lichtpunkts kann dabei sehr schnell und mit einer sehr hohen Auflösung erfolgen. Allerdings kann mittels der PSD nur ein Schwerpunkt der Lichtverteilung ermittelt werden, und keine Verteilung mehrerer Lichtpunkte.

Mittels dieser PSD kann eine Ablage des Auftreffpunkts des erfassten Strahls von einem Servokontroll-Nullpunkt bestimmt und auf Basis der Ablage ein Nachführen des Laserstahls auf das Ziel erfolgen. Zu diesem Zweck und zum Erreichen einer hohen Genauigkeit ist das Sichtfeld dieser PSD vergleichsweise klein, d. h. korrespondierend zum Strahldurchmesser des Messlaserstrahls, gewählt.

Eine Erfassung mit der PSD erfolgt koaxial zur Messachse, sodass die Erfassungsrichtung der PSD der Messrichtung entspricht. Die Anwendung des PSD-basierten Trackings und der Feinanzielung kann erst erfolgen, nachdem der Messlaser auf ein retro-reflektierende Ziel ausgerichtet worden ist.

Der beschriebenen Zielverfolgung muss ein Ankoppeln des Laserstrahls an den Reflektor vorausgehen. Hierzu kann am Tracker zusätzlich eine Erfassungseinheit mit einem positionssensitiven Sensor und mit einem verhältnismässig grossen Sichtfeld angeordnet sein. Zudem sind in gattungsgemässen Geräte zusätzliche Beleuchtungsmittel integriert, mit welchen das Ziel bzw. der Reflektor, insbesondere mit einer definierten, sich von der Wellenlänge der Distanzmessmittel unterscheidenden Wellenlänge, beleuchtet wird. Der Sensor kann in diesem Zusammenhang sensitiv auf einen Bereich um diese bestimmte Wellenlänge ausgebildet sein, um beispielsweise Fremdlichteinflüsse zu reduzieren oder komplett zu verhindern. Mittels der Beleuchtungsmittel kann das Ziel beleuchtet und mit der Kamera ein Bild des Ziels mit beleuchtetem Reflektor erfasst werden. Durch die Abbildung des spezifischen (wellenlängenspezifischen) Reflexes auf dem Sensor können die Reflexposition im Bild aufgelöst und damit ein Winkel relativ zur Erfassungsrichtung der Kamera und eine Richtung zum Ziel bzw. Reflektor bestimmt werden. Eine Ausführungsform eines Lasertrackers mit einer derartigen Zielsucheinheit ist beispielsweise aus der WO 2010/148525 A1 bekannt. Diese weist allerdings keine Funktionalität zur Ermittlung der räumlichen Ausrichtung eines Messhilfsinstruments auf.

Nachteilig an Lasertrackern des Standes der Technik ist die Notwendigkeit zur Verwendung mindestens zweier eigenständiger optischer Komponenten für die Erfassung der Ausrichtung eines Messhilfsinstruments und für die Zielverfolgung. Dies erhöht nicht nur den Material- und Konstruktionsaufwand und somit die Produktionskosten, sondern macht den Tracker auch grösser und schwerer und verschlechtert somit die Transportierbarkeit und die Handhabbarkeit durch den Benutzer.

Eine Aufgabe der Erfindung ist daher die Bereitstellung eines gegenüber dem Stand der Technik verbesserten Lasertrackers.

Insbesondere ist es eine Aufgabe der Erfindung, einen solchen Lasertracker mit weniger Konstruktions- und Materialaufwand bereitzustellen.

Eine weitere Aufgabe der Erfindung ist die Bereitstellung eines gegenüber Geräten des Standes der Technik kleineren, leichteren und energiesparenderen Lasertrackers.

Insbesondere ist es eine weitere Aufgabe der Erfindung, einen solchen Lasertracker bereitzustellen, der eine Funktionalität zur Erfassung der Ausrichtung eines Messhilfsinstruments aufweist.

Eine weitere Aufgabe der Erfindung ist es, ein verbessertes Lasertracker-System aus Lasertracker und Messhilfsinstrument bereitzustellen.

Darüber hinaus ist es eine Aufgabe der Erfindung, ein gegenüber Verfahren des Standes der Technik verbessertes Verfahren zur Positionsbestimmung eines Ziels bereitzustellen.

Mindestens eine dieser Aufgaben wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Erfindungsgemäss weist ein Lasertracker zur Positionsbestimmung eines Messhilfsinstruments, das einen Retroreflektor und eine Vielzahl von Zielmarkierungen aufweist, sowie zur fortlaufenden Verfolgung des Messhilfsinstruments, wobei die Zielmarkierungen in bekannter fixer räumlicher Verteilung auf dem Messhilfsinstrument angeordnet sind und ausgestaltet sind, Lichtstrahlen zu emittieren oder zu reflektieren, folgendes auf
- eine erste Strahlquelle zur Erzeugung von Messstrahlung,
- ein Entfernungsmessmodul mit Entfernungsmessfunktionalität und
- eine Zielerfassungseinheit zur Bestimmung eines Auftreffpunkts von vom Retroreflektor reflektierter Strahlung auf einem Sensor der Zielerfassungseinheit und zur Erzeugung eines Ausgangssignals zur Steuerung einer Fein-Anzielfunktionalität und einer Zielverfolgungsfunktionalität,
wobei die Zielerfassungseinheit erfindungsgemäss ausgestaltet ist
- zum Bestimmen von Auftreffpunkten von einer Vielzahl von Zielmarkierungen des Messhilfsinstruments reflektierten oder emittierten Lichtstrahlen auf dem Sensor, und
- zum Ermitteln der räumlichen Ausrichtung des Messhilfsinstruments basierend auf der Verteilung der Auftreffpunkte der Lichtstrahlen.

In einer Ausführungsform weist der Lasertracker zudem folgendes auf:
- eine eine Stehachse definierende Basis,
- eine Stütze, die eine im Wesentlichen orthogonal zur Stehachse stehende Kippachse definiert, wobei die Stütze relativ zur Basis um die Stehachse motorisiert schwenkbar ist und ein Horizontalschwenkwinkel durch eine Ausrichtung der Stütze relativ zur Basis definiert wird,
- eine um die Kippachse relativ zur Stütze motorisiert schwenkbare Strahllenkeinheit, wobei ein Vertikalschwenkwinkel durch eine Ausrichtung der Strahllenkeinheit relativ zur Stütze definiert wird, zur Emission und Ausrichtung der Messstrahlung entlang einer Emissionsachse und zum Empfang von zumindest einem Teil der am Retroreflektor reflektierten Messstrahlung, und
- Winkelmessfunktionalität zur Bestimmung des Horizontalschwenkwinkels und des Vertikalschwenkwinkels.

In der erfindungsgemässen Ausführungsform des Lasertrackers ist der Sensor der Zielerfassungseinheit als ein zweidimensionaler Bildsensor (Pixel-Array-Sensor) ausgestaltet, insbesondere als ein CMOS- oder CCD-Sensor.

Eine weitere Ausführungsform eines erfindungsgemässen Lasertrackers ist gekennzeichnet durch ein optisches System der Zielerfassungseinheit mit unveränderlichem Fokus und unveränderlichem Zoom, insbesondere ein Fixfokus-Objektiv aufweisend.

In einer Ausführungsform weist der Lasertracker Mittel zur kabellosen Kommunikation mit dem Messhilfsinstrument, mittels welcher der Lasertracker zum Steuern eines Leuchtens der Zielmarkierungen des Messhilfsinstruments, insbesondere zum synchronisierten Ein- und Ausschalten des Leuchtens von Zielmarkierungen, ausgestaltet ist, insbesondere zum Zwecke einer zeitlich aufeinanderfolgenden Zielverfolgung und Ausrichtungsbestimmung mittels der Zielerfassungseinheit, und/oder in Abhängigkeit von einer Entfernung zwischen dem Lasertracker und dem Messhilfsinstrument.

In der erfindungsgemässen Ausführungsform des Lasertrackers weist die Zielerfassungseinheit einen Zielverfolgungsmodus und einen Ausrichtungserfassungsmodus auf, wobei die Zielerfassungseinheit
- im Zielverfolgungsmodus zur Bestimmung des Auftreffpunkts der reflektierten Strahlung auf dem Sensor der Zielerfassungseinheit und zur Erzeugung des Ausgangssignals zur Steuerung der Fein-Anzielfunktionalität und der Zielverfolgungsfunktionalität ausgestaltet ist, und
- im Ausrichtungserfassungsmodus zur Bestimmung der Verteilung der Auftreffpunkte der Lichtstrahlen auf dem Sensor der Zielerfassungseinheit ausgestaltet ist und, darauf basierend, zum Ermitteln der räumlichen Ausrichtung des Messhilfsinstruments, wobei der Ausrichtungserfassungsmodus eine Messsequenz umfasst mit durch einen elektronischen Shutter des Sensors ausgelösten Aufnahmeereignissen,
wobei die Zielerfassungseinheit sich standardmässig im Zielverfolgungsmodus befindet, und der Ausrichtungserfassungsmodus benutzergesteuert anwählbar ist und eine und eine festgelegte Zeitspanne dauert.

In einer Ausführungsform des erfindungsgemässen Lasertrackers weist dieser eine gemeinsame Ein- und Ausgangsoptik auf zum Aussenden der Messstrahlung, zur Aufnahme der reflektierten Strahlung und zum Einlass der Lichtstrahlen der Zielmarkierungen.

In einer weiteren Ausführungsform des erfindungsgemässen Lasertrackers weist dieser eine zweite Strahlquelle zur Erzeugung einer Zielverfolgungsstrahlung auf und Strahllenkmittel zum koaxialen Aussenden der Messstrahlung und der Zielverfolgungsstrahlung durch die gemeinsame Ein- und Ausgangsoptik.

In einer Ausführungsform sind die Messstrahlung, die Zielverfolgungsstrahlung und die Strahllenkmittel derart beschaffen, dass ein erster Teil der reflektierten Strahlung auf das Entfernungsmessmodul und ein zweiter Teil der reflektierten Strahlung auf den Sensor der Zielerfassungseinheit leitbar sind.

In einer besonderen Ausführungsform unterscheiden sich die Messstrahlung und die Zielverfolgungsstrahlung voneinander, insbesondere hinsichtlich ihrer Polarität und/oder Wellenlänge. Insbesondere sind dabei die Strahllenkmittel derart beschaffen, dass ein erster Teil der reflektierten Strahlung auf das Entfernungsmessmodul und ein zweiter Teil der reflektierten Strahlung auf den Sensor der Zielerfassungseinheit leitbar sind, und/oder im Strahlgang der Zielerfassungseinheit ist ein Filter bereitgestellt, der für die Zielverfolgungsstrahlung im wesentlichen durchlässig ist und für die Messstrahlung im wesentlichen undurchlässig.

In einer Ausführungsform des erfindungsgemässen Lasertrackers weist dieser zur groben Bestimmung der Position des Messhilfsinstruments und zur Erzeugung eines Ausgangssignals zur Steuerung einer Anzielfunktionalität mindestens eine Grob-Anzieleinheit auf, insbesondere mit Beleuchtungsmitteln.

In einer weiteren Ausführungsform des erfindungsgemässen Lasertrackers weist dieser zum Aufnehmen von Bildern der Messumgebung eine Übersichtskamera auf, insbesondere mit Beleuchtungsmitteln.

In einer besonderen Ausführungsform des erfindungsgemässen Lasertrackers weist dieser eine Anzeigeeinheit auf, insbesondere zum Anzeigen von Bildern der Übersichtskamera und/oder von Informationen über durchgeführte Messungen und den Gerätezustand.

In einer anderen Ausführungsform des erfindungsgemässen Lasertrackers weist die erste Strahlquelle ein Helium-Neon-Lasermodul auf und das Entfernungsmessmodul ein Interferometer.

Ein Lasertracker-System mit einem erfindungsgemässen Lasertracker und einem Messhilfsinstrument, das einen Retroreflektor und eine Vielzahl Zielmarkierungen aufweist, wobei die Zielmarkierungen in bekannter fixer räumlicher Verteilung auf dem Messhilfsinstrument angeordnet sind, und ausgestaltet sind, Lichtstrahlen zu emittieren oder zu reflektieren, weist erfindungsgemäss Mittel zur kabellosen Kommunikation zwischen dem Lasertracker und dem Messhilfsinstrument auf zum Steuern eines Leuchtens der Zielmarkierungen, insbesondere zum synchronisierten Ein- und Ausschalten des Leuchtens von Zielmarkierungen.

In einer Ausführungsform des Lasertracker-Systems erfolgt das Steuern des Leuchtens der Zielmarkierungen zum Zwecke einer zeitlich aufeinanderfolgenden Zielverfolgung und Ausrichtungsbestimmung mittels der Zielerfassungseinheit.

In einer weiteren Ausführungsform des Lasertracker-Systems erfolgt das Steuern des Leuchtens der Zielmarkierungen in Abhängigkeit von einer Entfernung zwischen dem Lasertracker und dem Messhilfsinstrument.

Ein Verfahren zur Positionsbestimmung eines Messhilfsinstruments, das einen Retroreflektor und eine Vielzahl Zielmarkierungen aufweist, sowie insbesondere zur fortlaufenden Verfolgung des Messhilfsinstruments, mittels eines Lasertrackers, wobei die Zielmarkierungen in bekannter fixer räumlicher Verteilung auf dem Messhilfsinstrument angeordnet sind und ausgestaltet sind, Lichtstrahlen zu emittieren oder zu reflektieren, mit einem
- Ausrichten einer Strahlung emittierenden Strahllenkeinheit des Lasertrackers auf das Messhilfsinstrument,
- Aussenden einer Strahlung auf den Retroreflektor zur Erzeugung einer reflektierten Strahlung,
- Empfangen der reflektieren Strahlung mit einem Sensor einer Zielerfassungseinheit,
- Bestimmen eines Auftreffpunkts der reflektierten Messstrahlung auf dem Sensor,
- Erzeugen eines Ausgangssignals zur Steuerung einer Zielverfolgungsfunktionalität, basierend auf dem Auftreffpunkt,
- Empfangen der reflektierten Strahlung mit einer Entfernungsmesseinheit,
- Bestimmen einer Entfernung zum Retroreflektor,
- Bestimmen einer Richtung zum Retroreflektor, und
- Bestimmen einer räumlichen Lage des Messhilfsinstruments anhand von Lichtstrahlen der Zielmarkierungen,
weist erfindungsgemäss ein Empfangen von Lichtstrahlen der Zielmarkierungen mit dem Sensor auf, wobei das Bestimmen der räumlichen Lage des Messhilfsinstruments vermittels eines Bestimmens von Positionen der Auftreffpunkte der Zielmarkierungen auf dem Sensor erfolgt.

In einer Ausführungsform des erfindungsgemässen Verfahrens erfolgt das Ausrichten der Strahllenkeinheit auf das Messhilfsinstrument mittels einer von einem Ausgangssignal einer Grob-Anzieleinheit gesteuerten Grob-Anzielfunktionalität, wobei das Verfahren ausserdem aufweist
- ein Beleuchten des Messhilfsinstruments durch Beleuchtungsmittel der Grob-Anzieleinheit zur Erzeugung einer Reflexion durch den Retroreflektor,
- ein Empfangen der Reflexion durch die Grob-Anzieleinheit, und
- ein grobes Bestimmen der Position des Messhilfsinstruments basierend auf der Reflexion, und
- ein Erzeugen des Ausgangssignals zur Steuerung der Grob-Anzielfunktionalität, basierend auf der groben Position des Messhilfsinstruments.

In einer weiteren Ausführungsform des erfindungsgemässen Verfahrens erfolgen das Empfangen der reflektierten Strahlung mit dem Sensor und das Empfangen der Lichtstrahlen sequentiell, insbesondere wobei das Aussenden der Strahlung und ein Aussenden von Lichtstrahlen der Zielmarkierungen aufeinander abgestimmt abwechselnd erfolgen.

Der erfindungsgemässe Lasertracker, das erfindungsgemässe Lasertracker-System und das erfindungsgemässe Messverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine beispielhafte Ausführungsform eines erfindungsgemässen Lasertrackers mit einem Messhilfsinstrument;
- Fig. 2: eine beispielhafte Ausführungsform eines erfindungsgemässen Lasertrackers;
- Fig. 3: ein erfindungsgemässes Ermitteln der Position und Ausrichtung des Messhilfsinstruments;
- Fig. 4a-b: anhand eines schematischen Aufbaus der Anzieleinheit einer ersten beispielhaften Ausführungsform eines erfindungsgemässen Lasertrackers die grobe Ausrichtung auf das Messhilfsinstrument und das Ermitteln der Position des Messhilfsinstruments;
- Fig. 5: anhand eines schematischen Aufbaus der Anzieleinheit einer zweiten beispielhaften Ausführungsform eines erfindungsgemässen Lasertrackers das Ermitteln der Position und Ausrichtung des Messhilfsinstruments;
- Fig. 6: anhand eines schematischen Aufbaus einer Anzieleinheit gemäss Fig. 5 das alleinige Ermitteln der Ausrichtung des Messhilfsinstruments;
- Fig. 7a-b: ein Ermitteln der Ausrichtung des Messhilfsinstruments gemäss Fig. 5 in unterschiedlich grossen Distanzen zum Messhilfsinstrument durch Ein- und Ausschalten verschiedener Gruppen von Lichtpunkten auf dem Messhilfsinstrument;
- Fig. 8a-b: eine beispielhafte Ausführungsform einer erfindungsgemässen Zielerfassungseinheit mit einem Bildsensor, aufweisend sowohl eine Zielverfolgungs- als auch eine Ausrichtungsermittlungsfunktionalität; und
- Fig. 9a-f: einen beispielhaften Ablauf zum Ermitteln der Ausrichtung des Messhilfsinstruments in einem erfindungsgemässen Lasertracker-System.

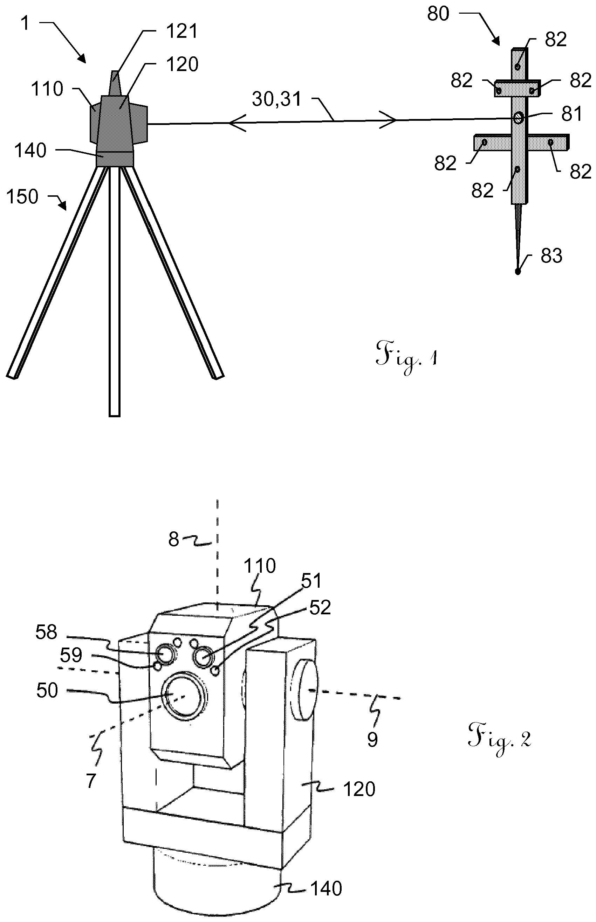

Figur 1 zeigt eine beispielhafte Ausführungsform eines erfindungsgemässen Lasertrackers 1, umfassend eine Basis 140, eine darauf angebrachte Stütze 120 mit einem Griff 121 und eine an zwei (hier nicht dargestellten) Holmen der Stütze 120 gelagerte Strahllenkeinheit 110. Der abgebildete Lasertracker 1 ist auf einem Stativ 150 angeordnet und misst mittels eines Laserstrahles 30 die Distanz zu einem auf einem Messhilfsinstrument 80 befindlichen Retroreflektor 81. Das Messhilfsinstrument 80 - hier beispielhaft als Messtaster ausgeführt - umfasst weiterhin eine Anzahl Zielmarkierungen 82, beispielsweise in Form von reflektierenden oder selbstleuchtenden Lichtpunkten, sowie einen Messkopf 83 zum Plazieren auf einem zu vermessenden Zielpunkt eines Zielobjektes 85.

Um Bewegungen des Messhilfsinstruments 80 zu erkennen und nachvollziehen zu können, sodass der Laserstrahl 30 auf den Retroreflektor 81 ausgerichtet bleibt, weist der Lasertracker 1 eine Zielerfassungseinheit auf.

Die Zielerfassungseinheit ist vorzugsweise in der Strahllenkeinheit 110 angeordnet und ermöglicht durch ein Erfassen der Ausrichtung des von einem Ziel, insbesondere dem Retroreflektor 81, reflektierten Laserstrahls 31 das Nachführen der Ausrichtung des ausgesendeten Laserstrahls 30. Durch das Nachführen der Laserstrahlausrichtung kann eine fortlaufende Zielverfolgung (Tracking) des Messhilfsinstruments 80 erfolgen und die Entfernung und Position des Zielpunkts fortlaufend relativ zum Lasertracker 1 bestimmt werden.

Figur 2 zeigt schematisch den äusseren Aufbau eines Lasertrackers 1 mit den Elementen Ein- und Austrittsoptik 50, Grob-Anzieleinheit 51 mit hier zwei Lichtquellen 52 an zwei Seiten der Eintrittsoptik der Grob-Anzieleinheit 51, sowie einer Übersichtskamera 58 mit ihrer Beleuchtung 59, hier ebenfalls mit zwei einzelnen Lichtquellen an zwei Seiten der Eintrittsoptik der Übersichtskamera 58. Ferner sind gezeigt: die Mess- oder Emissionsachse 7, eine Schwenkachse 8, um welche die Stütze 120 bezüglich einer Basis 140 drehbar ist, und eine Kippachse 9, um welche die Strahllenkeinheit 110 bezüglich der Stütze 120 neigbar ist und.

Eine Regelungs- und Steuerungseinheit (hier nicht dargestellt) erfasst und verarbeitet die Messwerte verschiedener Sensoren und steuert Achslagemotoren zur Ausrichtung der Strahllenkeinheit 110. Eine Anzeigevorrichtung (nicht dargestellt) zeigt Informationen über Messungen und den Gerätezustand und kann auch Bilder von einem der vorhandenen Bildsensoren, insbesondere der Übersichtskamera 58, anzeigen. Die Grob-Anzieleinheit 51 kann alternativ auch mehr als eine Optik aufweisen.

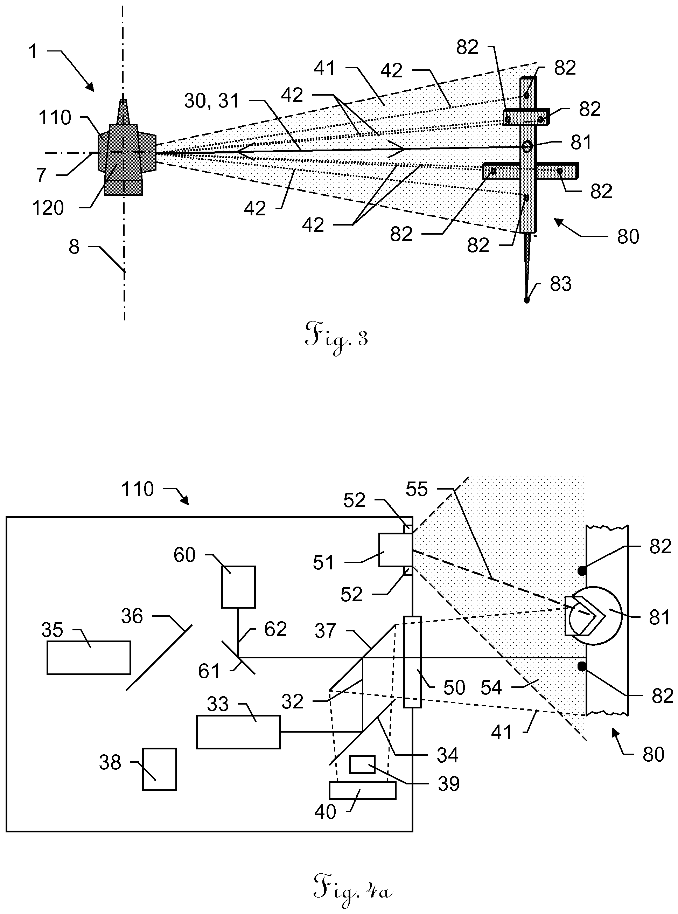

Figur 3 illustriert anhand der Ausführungsform gemäss Figur 1 das Ermitteln der Position und der Ausrichtung des Messhilfsinstruments 80. Eine Strahlquelle des Lasertrackers 1 sendet durch eine Ausgangsoptik der Strahllenkeinheit 110 Messstrahlung 30 auf den Retroreflektor 81 des Messhilfsinstruments 80. Die Messstrahlung 30 wird vom Retroreflektor 81 als reflektierte Messstrahlung 31 in die Strahllenkeinheit 110 reflektiert. Dort wird die reflektierte Messstrahlung 31 in eine Distanzmessvorrichtung 38 geleitet, durch welche eine Entfernung zum Messhilfsinstruments 80 ermittelt wird. Gleichzeitig empfängt ein Bildsensor des Lasertrackers 1 mit einem Sichtwinkelbereich 41 von Lichtpunkten 82 des Messhilfsinstruments 80 ausgesendete Lichtstrahlen 42. Die Lichtpunkte 82, insbesondere LED, sind in einem bekannten, insbesondere dreidimensionalen, Muster auf dem Messhilfsinstrument 80 angeordnet. Aus der Anordnung von Auftreffpunkten der Lichtstrahlen 42 der Lichtpunkte 82 auf dem Bildsensor kann eine Ausrichtung des Messhilfsinstruments 80 ermittelt werden. Insbesondere kann der Lasertracker 1 über eine Identifizierungsfunktionalität zur automatischen Identifizierung des verwendeten Messhilfsinstruments 80 verfügen. Daten über verschiedene verwendbare Messhilfsinstrumente 80 können in einer Datenbank des Lasertrackers 1 abrufbar sein. Diese Daten können insbesondere die Anordnung der Zielmarkierungen 82 auf dem jeweiligen Messhilfsinstrument 80 umfassen.

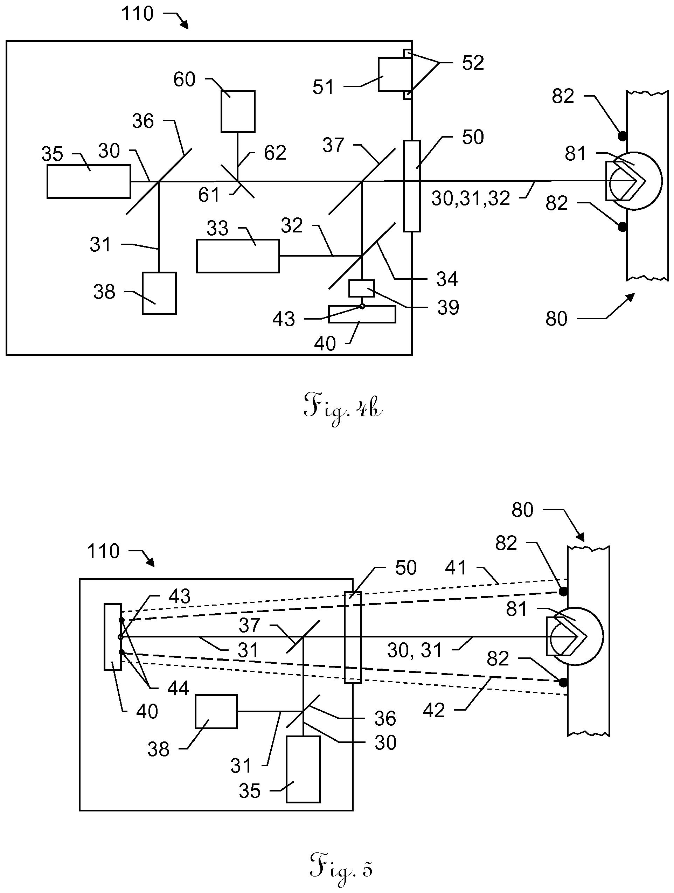

Die Figuren 4a und 4b illustrieren anhand eines schematischen Aufbaus einer ersten beispielhaften Ausführungsform einer Strahllenkeinheit 110 eines erfindungsgemässen Lasertrackers 1 gemäss Figur 2 die grobe Ausrichtung der Strahllenkeinheit 110 auf ein Messhilfsinstrument 80 (Figur 4a) und das Ermitteln der Position des Messhilfsinstruments 80 (Figur 4b).

Das Messhilfsinstrument 80 weist einen Retroreflektor 81 und eine Vielzahl von Zielmarkierungen in Form von punktförmigen Lichtquellen 82, insbesondere LED, in fixer, bekannter räumlicher Verteilung auf.

Die Strahllenkeinheit 110 verfügt an seiner dem Messhilfsinstrument 80 zugewandten Vorderseite über eine Ein- und Austrittsoptik 50 zur Aussendung von Strahlung entlang der Messachse und zum Einlass reflektierter Strahlung, sowie über eine Grob-Anzieleinheit 51 mit zwei Lichtquellen 52. Die Ein- und Austrittsoptik 50 kann insbesondere als Fixfokus-Objektiv mit unveränderlichem Fokus und unveränderlichem Zoom ausgestaltet sein.

Die Strahllenkeinheit 110 weist in ihrem Innern eine erste Strahlquelle 35 zur Erzeugung einer Messstrahlung 30, sowie eine Distanzmessvorrichtung 38 zum Empfang der reflektierten Messstrahlung 31 und zum Ermitteln einer Distanz zu einem Ziel, hier dem Retroreflektor 81. Die Distanzmessvorrichtung 38 ist im gezeigten Beispiel ein Absolutdistanzmessgerät, kann aber auch ein Interferometer, oder eine Kombination von beiden sein.

Die Strahllenkeinheit 110 weist ausserdem eine zweite Strahlquelle 33 zur Erzeugung einer Zielverfolgungsstrahlung 32 und eine Zielerfassungseinheit 40 zum Empfang der reflektierten Zielverfolgungsstrahlung, zur Bestimmung eines Auftreffpunkts 43 der reflektierten Strahlung auf einem, insbesondere als zweidimensionalen Bildsensor (Pixel-Array-Sensor) ausgestaltetem, Sensor der Zielerfassungseinheit 40 und zur Erzeugung eines Ausgangssignals zur Steuerung einer Zielverfolgungsfunktionalität des Lasertrackers 1.

Vorzugsweise verläuft die optische Achse der ersten Strahlquelle 35 ausserhalb des Lasertrackers koaxial zur optischen Achse der zweiten Strahlquelle 33 auf einer gemeinsamen Emissionsachse 7. Dies setzt voraus, dass die beiden Strahlquellen 33,35 eine gemeinsame Austrittsoptik 50 aufweisen. Eine gemeinsame Ein- und Austrittsoptik 50 zweier Strahlengänge bedeutet, dass die beiden Strahlengänge durch dasselbe optische Element, wie eine Linse oder eine Scheibe, aus dem Gerät in die Umgebung des Gerätes austreten oder aus der Umgebung des Gerätes in das Gerät eintreten. In der Regel sind dabei die Strahlengänge zumindest annähernd koaxial.

Darüber hinaus weist die Strahllenkeinheit 110 eine Anzahl an Strahlteilern 34,36,37 auf, über die die Mess- und Zielverfolgungsstrahlungen 30,32 entlang der Emissionsachse 7 durch die Ein- und Austrittsoptik 50 emittiert werden und über die die vom Retroreflektor 81 reflektierte Strahlung auf die Distanzmessvorrichtung 38 und die Sensoroberfläche der Zielerfassungseinheit 40 geleitet wird.

Die Lichtquellen 82 des Messhilfsinstruments 80 emittieren vorzugsweise Lichtstrahlen 42 mit demselben oder einem ähnlichen Wellenlängenbereich wie die Zielverfolgungsstrahlung 32.

Die Messstrahlung 30 und die Zielverfolgungsstrahlung 32 unterscheiden sich insbesondere hinsichtlich ihrer Polarität und/oder Wellenlänge so voneinander, dass durch eine entsprechende Ausgestaltung eines vor der Zielerfassungseinheit 40 positionierten Filters 39 die für die Entfernungsmessung bestimmte reflektierte Strahlung herausgefiltert wird und nicht zur Zielerfassungseinheit 40 gelangt. Ebenso kann so eventuell auftretende externe Störstrahlung herausgefiltert werden, sodass nur die Lichtstrahlen 42 der Lichtquellen 82 und die Zielverfolgungsstrahlung 32 auf den Sensor der Zielerfassungseinheit 40 gelangt. Alternativ oder zusätzlich kann durch eine entsprechende Ausgestaltung des Strahlteilers 37 die Gesamtheit der reflektierten Strahlung 31 in einen für die Distanzmessung bestimmten Anteil und einen für die Zielverfolgung bestimmten Anteil trennbar sein. Der Strahlteiler 37 ist dann für eine der beiden Strahlungen im wesentlichen durchlässig, während er die andere reflektiert. Der hier dargestellte Strahlteiler 37 liesse dann die für die Distanzmessung bestimmte Strahlung zur Distanzmessvorrichtung 38 durch und reflektierte nur die für die Zielverfolgung bestimmte Strahlung auf die Sensoroberfläche der Zielerfassungseinheit 40.

Ebenfalls dargestellt ist eine optionale Pointer-Einheit mit einer Pointer-Strahlquelle 60 zur Erzeugung eines sichtbaren Pointer-Strahls 62, welcher über einen Pointer-Strahlteiler 61 im wesentlichen koaxial zur Messstrahlung 30 und zur Zielverfolgungsstrahlung 32 durch die Ein- und Austrittsoptik 50 emittierbar ist. Der Pointer-Strahl 62 erzeugt dabei einen sichtbaren (beispielsweise roten) Auftreffpunkt und dient zur Information für den Benutzer, insbesondere wenn Messstrahlung 30 und Zielverfolgungsstrahlung 32 für das menschliche Auge unsichtbar ausgestaltet sind.

In Figur 4a wird eine Funktionalität zur groben Ausrichtung der Strahllenkeinheit 110 auf das Messhilfsinstrument 80 mittels der Grob-Anzieleinheit 51 illustriert.

Die Grob-Anzieleinheit 51 weist einen Positionserfassungssensor auf. Licht von der Lichtquelle 52 der Grob-Anzieleinheit 51, welche eine einzige oder mehreren Einzel-Lichtquellen aufweisen kann, wird mit einem relativ grossen Abstrahlwinkel abgestrahlt. Dieser Abstrahlwinkel ist etwas grösser als der Sichtwinkelbereich 54 der Grob-Anzieleinheit 51. Der Sichtwinkelbereich 54 der Grob-Anzieleinheit 51 beträgt insbesondere mehr als 3° oder mehr als 10° oder mehr als 15° oder bis zu rund 30° (d. h. ± 15°). Dadurch ist das Messhilfsinstrument 80 für die Grob-Anzieleinheit 51 auch dann noch sichtbar, wenn es von der Zielerfassungseinheit 40 mit ihrem vergleichsweise engen Sichtwinkelbereich 41 noch nicht erfasst ist. Die Reflektion des Lichtes der Lichtquelle 52 wird als Grob-Position auf dem Positionserfassungssensor der Grob-Anzieleinheit 51 sichtbar und messbar.

Anhand dieser Messung wird die Strahllenkeinheit 110 auf das Messhilfsinstrument 80 ausgerichtet, bis die von der zweiten Strahlquelle 33 emittierte Zielverfolgungsstrahlung 32 auf den Retroreflektor 81 trifft und die Zielerfassungseinheit 40 die reflektierte Zielverfolgungsstrahlung detektiert. Anschliessend wird die detektierte Strahlung in bekannter Weise dazu verwendet, das Messhilfsinstrument 80 zu verfolgen (Tracking).

In Figur 4b wird eine Funktionalität zur Ermitteln der Position, d. h. Entfernung und Richtung, des Messhilfsinstruments 80 illustriert. Die Strahllenkeinheit 110 ist so auf das Messhilfsinstrument 80 ausgerichtet, dass die von der zweiten Strahlquelle 33 emittierte Zielverfolgungsstrahlung 32 auf den Retroreflektor 81 trifft und die Zielerfassungseinheit 40 die reflektierte Zielverfolgungsstrahlung detektiert. Durch Bestimmung eines Auftreffpunkts 43 der reflektierten Strahlung auf die Sensoroberfläche der Zielerfassungseinheit 40 wird ein Ausgangssignals zur Steuerung einer Fein-Anzielfunktionalität und einer Zielverfolgungsfunktionalität des Lasertrackers 1 erzeugt.

Zum Ermitteln der Entfernung zum Messhilfsinstrument 80 erzeugt die erste Strahlquelle 35 eine Messstrahlung 30, die koaxial mit der Zielverfolgungsstrahlung 32 auf den Retroreflektor 81 gesendet wird, wo sie - aufgrund der kontinuierlichen Zielverfolgung - ebenso koaxial retroreflektiert wird. Die reflektierte Messstrahlung 31 wird über Strahlteiler 36,37 in die Distanzmessvorrichtung 38 geleitet, welches eine Distanz zum Messhilfsinstrument 80 ermittelt. Gleichzeitig wird über Winkelmessfunktionalität des Lasertrackers 1 die aktuelle Ausrichtung der Strahllenkeinheit 110 und damit die Richtung zum Messhilfsinstrument 80 ermittelt. Aus Richtung und Entfernung kann eine relative Position des Messhilfsinstruments 80 zum Lasertracker 1 bestimmt werden.

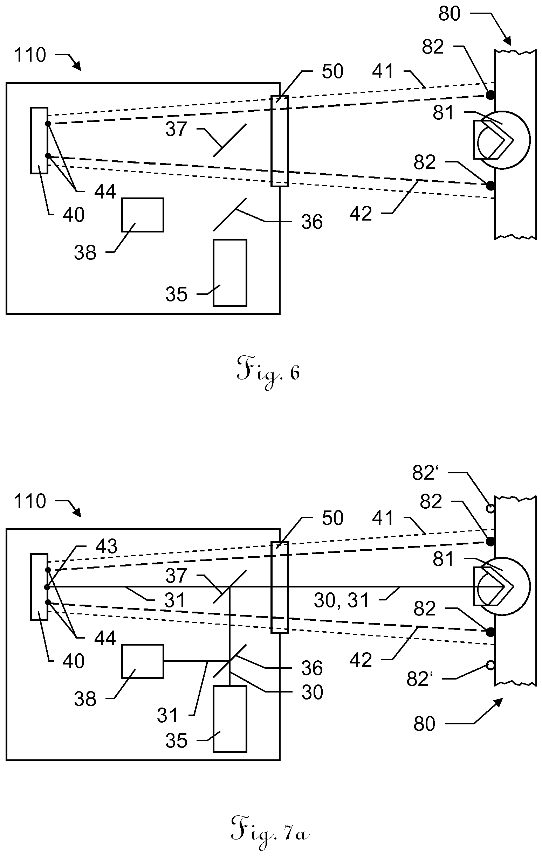

In den Figuren 5 und 6 ist ein schematischer Aufbau einer zweiten beispielhaften Ausführungsform einer Strahllenkeinheit 110 eines erfindungsgemässen Lasertrackers 1 dargestellt. In dieser Ausführungsform ist nur eine einzige Strahlquelle 35 vorgesehen, deren Messstrahlung 30 sowohl zu Ermittlung der Entfernung zum Messhilfsinstrument 80 als auch zur Zielverfolgung verwendet wird. Obwohl hier nicht dargestellt, kann natürlich auch diese Ausführungsform optional eine Grob-Anzieleinheit 51, eine Übersichtskamera 58, einen Filter 39 und/oder eine Pointer-Strahlquelle 60 aufweisen.

Figur 5 zeigt ein gleichzeitiges Ermitteln der Position als auch der Ausrichtung des Messhilfsmittels 80. Dabei sendet die Strahlquelle 35 Messstrahlung 30 auf den Retroreflektor 81 aus, die reflektierte Messstrahlung 31 wird über Strahlteiler 36,37 teilweise auf einen Sensor der Zielerfassungseinheit 40 und teilweise in die Distanzmessvorrichtung 38 geleitet. Zugleich emittieren die als LED 82 ausgestalteten Zielmarkierungen Lichtstrahlen 42 in Richtung des Lasertrackers, insbesondere in einem ähnlichen Wellenlängenbereich wie die Messstrahlung 30. Die Lichtstrahlen 42 treten durch die Austrittsoptik 50 ins Innere der Strahllenkeinheit 110 und werden dort auf den Sensor der Zielerfassungseinheit 40 geleitet. Die Auftreffpunkte 44 der Lichtstrahlen 42 auf der Sensoroberfläche werden detektiert. Aus der Anordnung der Vielzahl von Auftreffpunkten 44 auf dem Sensor der Zielerfassungseinheit 40 kann die räumliche Ausrichtung des Messhilfsinstruments 80 ermittelt werden. Mit dem dargestellten Verfahren kann demnach die räumliche Lage des Messhilfsinstruments 80 in sechs Freiheitsgraden (6DOF) ermittelt werden. Somit kann auch die Position eines beispielsweise von einem Messkopf des Messhilfsinstruments 80 (siehe Figur 1) kontaktierten Punktes eines Objektes exakt bestimmt werden.

In Figur 6 ist, als Alternative zum in Figur 5 gezeigten Verfahren, das alleinige Ermitteln der Ausrichtung des Messhilfsinstruments 80 dargestellt. Um eventuelle Fehler bei der Unterscheidung des Auftreffpunkts der reflektierten Messstrahlung und der Auftreffpunkte 44 der Lichtstrahlen 42 der Zielmarkierungen 82 zu vermeiden, wird für die Ermittlung der Anordnung der Vielzahl von Auftreffpunkten 44 auf der Sensoroberfläche der Zielerfassungseinheit 40, und damit der räumlichen Ausrichtung des Messhilfsinstruments 80, die Messstrahlung kurzzeitig ausgeschaltet.

Das Aussenden der Lichtstrahlen 42 durch die LED 82 des Messhilfsinstruments 80 kann - in allen dargestellten Varianten - sowohl kontinuierlich erfolgen als auch benutzergesteuert oder auf Anforderung durch den Lasertracker - beispielsweise über die Messstrahlung 30, einen zusätzlichen Infrarotsender und -empfänger oder mittels Bluetooth®.

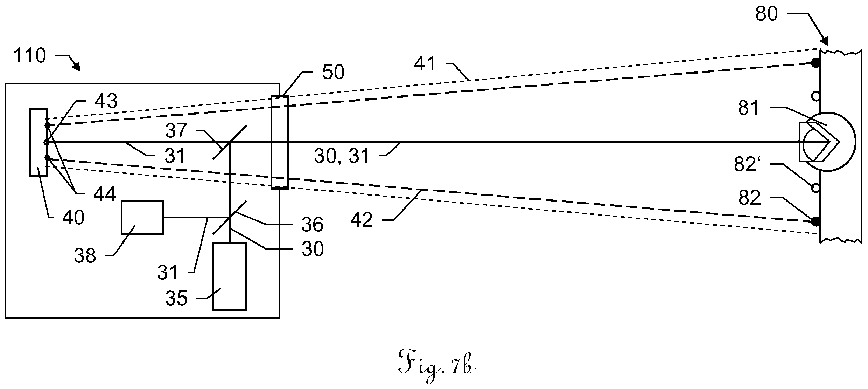

Die Figuren 7a und 7b zeigen eine beispielhafte Ausführungsform des erfindungsgemässen Verfahrens für ein Messhilfsinstrument 80 mit zwei Gruppen von Zielmarkierungen 82,82'. Die als selbstleuchtende punktförmige Lichtquellen, insbesondere LED, ausgestalteten Zielmarkierungen 82,82' liegen dabei doppelt in bekannter Anordnung vor, wobei sie insbesondere zweimal dasselbe Muster in unterschiedlicher Grösse bilden können. Die beiden Gruppen sind dabei getrennt voneinander ein- und ausschaltbar. Dies ist beispielsweise in der EP 2 008 120 B1 beschrieben.

Figur 7a zeigt das Messhilfsinstrument 80 in einer relativ kurzen Entfernung zur Strahllenkeinheit 110 und damit zur Zielerfassungseinheit 40. Der Sichtwinkelbereich 41 der Zielerfassungseinheit 40 ist deutlich kleiner als der Sichtwinkelbereich 54 der Grob-Anzieleinheit 51 (siehe Figur 4a). Durch ihren kleinen Sichtwinkelbereich 41 und die Nähe zum Messhilfsinstrument 80 kann die Zielerfassungseinheit 40 nur eine der beiden LED-Gruppen erfassen, während die zweite ausserhalb des Sichtwinkelbereichs 41 liegt. Die Lichtquellen 82 der inneren Gruppe sind daher eingeschaltet und emittieren Lichtstrahlen 42, die von der Zielerfassungseinheit 40 erfassbar und auswertbar sind. Die Lichtquellen 82' der äusseren Gruppe sind hingegen vorzugsweise ausgeschaltet.

Figur 7b zeigt das Messhilfsinstrument 80 in einer gegenüber Figur 7a deutlich vergrösserten Entfernung zur Strahllenkeinheit 110. Aufgrund der Entfernung kann die Zielerfassungseinheit 40 hier trotz ihres kleinen Sichtwinkelbereiches 41 beide LED-Gruppen erfassen. Da das Muster der inneren LED-Gruppe aufgrund der grossen Entfernung sehr klein auf der Sensoroberfläche der Zielerfassungseinheit 40 abgebildet werden würde, worunter die Genauigkeit der Ausrichtungsermittlung leiden könnte, wird in diesem Fall die äussere LED-Gruppe zur Ermittlung der Ausrichtung verwendet. Die Lichtquellen 82' der inneren Gruppe sind daher hier ausgeschaltet, während die Lichtquellen 82 der äusseren Gruppe Lichtstrahlen 42 auf den Sensor der Zielerfassungseinheit 40 emittieren.

Welche der zwei (oder gegebenenfalls auch mehr) Gruppen von Lichtquellen 82,82' auf dem Messhilfsinstrument 80 eingeschaltet wird, ist abhängig von der Entfernung zwischen Lasertracker 1 und Messhilfsinstrument 80. Die aktuelle Entfernung kann insbesondere über die Messstrahlung 30 ermittelt und diese - oder ein entsprechender Befehl - an das Messhilfsinstrument 80 kommuniziert werden.

Ein solches Kommunizieren kann beispielsweise über die Messstrahlung 30, einen zusätzlichen Infrarotsender am Lasertracker 1 oder mittels Bluetooth® erfolgen. Ebenso kann mit einem Benutzer des Messhilfsinstrument 80 kommuniziert werden, beispielsweise, wenn das Messhilfsinstrument 80 stärker in Richtung des Lasertrackers 1 gedreht werden muss. Das Messhilfsinstrument 80 kann dem Benutzer dann beispielsweise ein optisches oder akustisches Signal geben oder z. B. auch vibrieren.

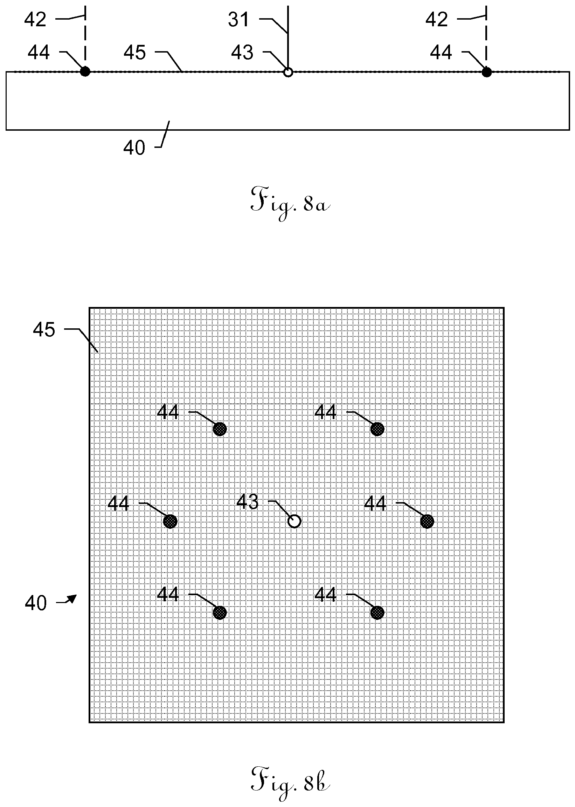

Die Figuren 8a und 8b zeigen eine beispielhafte Ausführungsform einer erfindungsgemässen Zielerfassungseinheit 40. Dabei zeigt Figur 8a die Einheit in einem Querschnitt, und Figur 8b den Sensor 45 in einer Aufsicht.

Die gezeigte Zielerfassungseinheit 40 weist einen Bildsensor 45, beispielsweise einen CMOS- oder CCD-Sensor, auf, dessen lichtempfindliche Sensoroberfläche zum Erfassen der Position der Auftreffpunkte 43,44 von Lichtstrahlen 31,42 auf dem Sensor 45 ausgestaltet ist. Abhängig von der Position des Auftreffpunktes 43 der reflektierten Mess- oder Zielverfolgungsstrahlung 31, insbesondere relativ zu einem definierten Servokontroll-Nullpunkt, beispielsweise einem Mittelpunkt der Sensoroberfläche, kann eine Zielverfolgungsfunktionalität des Lasertrackers gesteuert werden. Aus den Positionen der Auftreffpunkte 44 der von den Lichtpunkten des Messhilfsinstruments ausgesendeten Lichtstrahlen 42 kann eine aktuelle Ausrichtung des Messhilfsinstruments abgeleitet werden.

Vorzugsweise sind die Auftreffpunkte 44 der von den Lichtpunkten des Messhilfsinstruments ausgesendeten Lichtstrahlen 42 von dem Auftreffpunkt 43 der reflektierten Mess- oder Zielverfolgungsstrahlung 31 vom Sensor 45 der Zielerfassungseinheit 40 eindeutig unterscheidbar. Alternativ können, wie in Figur 6 gezeigt, die Zielverfolgung und das Ermitteln der Ausrichtung zeitlich getrennt voneinander durchgeführt werden: Um eventuelle Fehler bei der Unterscheidung des Auftreffpunkts 43 der reflektierten Messstrahlung 31 und der Auftreffpunkte 44 der Lichtstrahlen 42 der LED des Messhilfsinstruments zu vermeiden, kann für die Ermittlung der Anordnung der Vielzahl von Auftreffpunkten 44 auf dem Sensor 45, und damit der räumlichen Ausrichtung des Messhilfsinstruments, die Messstrahlung in einem Ausrichtungserfassungsmodus kurzzeitig ausgeschaltet werden. Ebenso können die LED auf dem Messhilfsinstrument während der Zielverfolgung in einem Zielverfolgungsmodus ausgeschaltet bleiben, um nur für das Ermitteln der räumlichen Ausrichtung kurzzeitig eingeschaltet zu werden.

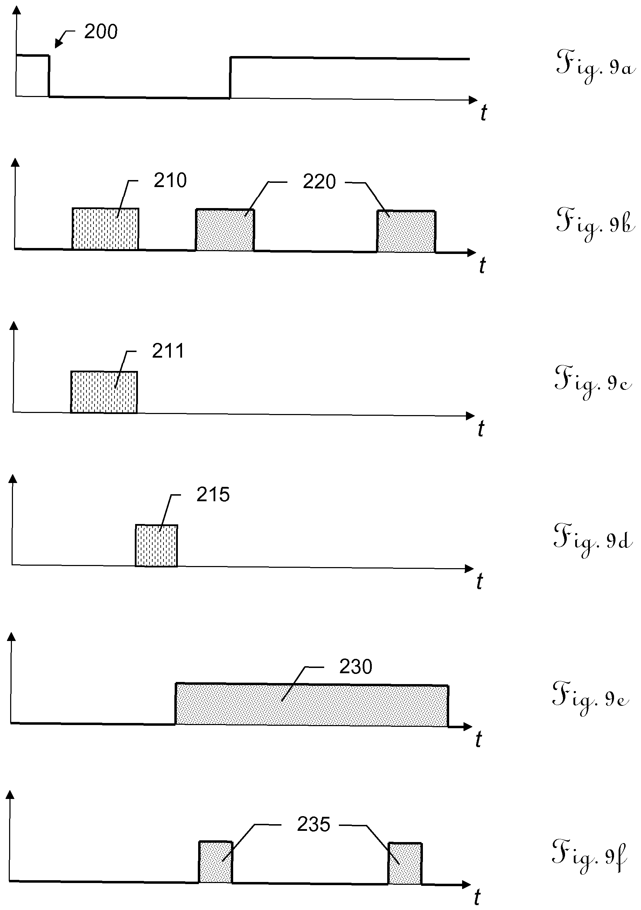

Die Figuren 9a-f illustrieren einen beispielhaften Ablauf eines Ausrichtungserfassungsmodus in einem erfindungsgemässen Lasertracker-System zum Ermitteln der Ausrichtung eines Messhilfsintruments, aufweisend mindestens eine Gruppe von Leuchteinheiten als Zielmarkierungen. Die mit t gekennzeichnete Achse stellt dabei jeweils einen Zeitstrahl dar. Der hier dargestellte Ablauf stellt das Ermitteln der Ausrichtung als Folge einer Benutzereingabe dar.

In Figur 9a ist der Zustand eines Schalters am Messhilfsinstrument dargestellt, der zum Auslösen des Ausrichtungserfassungsmodus durch einen Benutzer dient. Zu einem gewünschten Zeitpunkt löst der Benutzer durch kurzes Herunterdrücken 200 des Schalters die Messfunktionalität aus.

In Figur 9b ist der Zustand der Leuchteinheiten (bzw. einer Gruppe der Leuchteinheiten) des Messhilfsinstruments dargestellt. Mit kurzer, technisch bedingter, Zeitverzögerung, insbesondere um wenige Millisekunden verzögert, sendet eine Leuchteinheit für einen kurzen Zeitraum 210 Licht im infraroten Spektrum mit einem kodierten Befehl an eine Infrarotempfangseinheit des Lasertrackers. Kurz darauf, d. h. einige Millisekunden später, beginnt eine Leuchtsequenz der Leuchteinheiten, aus welcher eine Ausrichtung des Messhilfsinstruments ableitbar ist. Insbesondere kann diese aus zwei Leuchtperioden 220 bestehen, wobei während der ersten Periode nur eine vordefinierte Leuchteinheit oder eine bestimmte Teilmenge der Leuchteinheiten leuchtet, und während der zweiten Periode alle Leuchteinheiten (bzw. alle Leuchteinheiten einer Leuchteinheitengruppe) leuchten.

In Figur 9c ist der Zustand einer Infrarotempfangseinheit des Lasertrackers gezeigt. Dieser empfängt im Zeitraum 211 den kodierten Befehl zur Ausrichtungsermittlung. Die Infrarotempfangseinheit kann insbesondere im Entfernungsmessmodul des Lasertrackers untergebracht sein.

Weist das Messhilfsinstrument (wie in Figuren 7a-b dargestellt) mehrere Gruppen von Leuchteinheiten auf, kann optional zu diesem Zeitpunkt - in Abhängigkeit von einer vorab gemessenen Entfernung - ein Befehl 215 an das Messhilfsinstrument gesendet werden, welche der mehreren Gruppen leuchten soll. Dies ist in Figur 9d gezeigt. Ein solcher Befehl 215 kann insbesondere mittels der Messstrahlung übermittelt werden. Ansonsten kann optional eine Bestätigung an das Messhilfsinstrument übermittelt werden, dass das Signal empfangen wurde, und eine Messsequenz eingeleitet wird.

Figur 9e zeigt die Messsequenz 230 der Zielerfassungseinheit, diese startet sobald der Befehl zur Ausrichtungsermittlung von der Infrarotempfangseinheit an die Zielerfassungseinheit weitergeleitet wurde. Dies kann technisch bedingt wiederum einige Millisekunden dauern.

Während der Messsequenz 230 steuert die Zielerfassungseinheit einen elektronischen Shutter eines Bildsensors. Dies ist in Figur 9f gezeigt. Hier dargestellt sind zwei Aufnahmeperioden 235 des Bildsensors. Die erste Periode beginnt dabei insbesondere ungefähr 100 Millisekunden nach Auslösen des Schalters durch den Benutzer. Die Aufnahmeperioden 235 sind mit den in Figur 9b dargestellten Leuchtperioden 220 synchronisiert, insbesondere derart, dass die Aufnahmeperioden 235 kürzer sind als die Leuchtperioden 220, sodass während jeweils einer gesamten Aufnahmeperiode 235 des Bildsensors ein Leuchten der Leuchteinheiten aufgenommen werden kann.

Es versteht sich, dass diese dargestellten Figuren nur mögliche Ausführungsbeispiele schematisch darstellen. Die verschiedenen Ansätze können ebenso miteinander sowie mit Verfahren und Geräten des Standes der Technik kombiniert werden.

## Patentansprüche

1. Lasertracker (1) zur Positionsbestimmung eines Messhilfsinstruments (80), das einen Retroreflektor (81) und eine Vielzahl von Zielmarkierungen (82) aufweist, sowie zur fortlaufenden Verfolgung des Messhilfsinstruments (80), wobei die Zielmarkierungen (82) in bekannter fixer räumlicher Verteilung auf dem Messhilfsinstrument (80) angeordnet sind und ausgestaltet sind, Lichtstrahlen (42) zu emittieren oder zu reflektieren, und wobei der Lasertracker (1) aufweist
• eine erste Strahlquelle (35) zur Erzeugung von Messstrahlung (30),
• ein Entfernungsmessmodul (38) mit Entfernungsmessfunktionalität und
• eine Zielerfassungseinheit (40) zur Bestimmung eines Auftreffpunkts (43) von vom Retroreflektor (81) reflektierter Strahlung (31) auf einem Sensor (45) der Zielerfassungseinheit (40) und zur Erzeugung eines Ausgangssignals zur Steuerung einer Fein-Anzielfunktionalität und einer Zielverfolgungsfunktionalität, wobei der Sensor (45) der Zielerfassungseinheit (40) als zweidimensionaler Bildsensor ausgestaltet ist,
**dadurch gekennzeichnet, dass**
die Zielerfassungseinheit (40) ausgestaltet ist
• zum Bestimmen von Auftreffpunkten (44) von einer Vielzahl von Zielmarkierungen (82) des Messhilfsinstruments (80) reflektierten oder emittierten Lichtstrahlen (42) auf dem Sensor (45), und
• zum Ermitteln der räumlichen Ausrichtung des Messhilfsinstruments (80) basierend auf der Verteilung der Auftreffpunkte (44) der Lichtstrahlen (42),
wobei die Zielerfassungseinheit (40) einen Zielverfolgungsmodus und einen Ausrichtungserfassungsmodus aufweist, wobei die Zielerfassungseinheit (40)
• im Zielverfolgungsmodus zur Bestimmung des Auftreffpunkts (43) der reflektierten Strahlung (31) auf dem Sensor (45) der Zielerfassungseinheit (40) und zur Erzeugung des Ausgangssignals zur Steuerung der Fein-Anzielfunktionalität und der Zielverfolgungsfunktionalität ausgestaltet ist, und
• im Ausrichtungserfassungsmodus zur Bestimmung der Verteilung der Auftreffpunkte (44) der Lichtstrahlen (42) auf dem Sensor (45) der Zielerfassungseinheit (40) ausgestaltet ist und, darauf basierend, zum Ermitteln der räumlichen Ausrichtung des Messhilfsinstruments (80), wobei der Ausrichtungserfassungsmodus eine Messsequenz (230) umfasst mit durch einen elektronischen Shutter des Sensors (45) ausgelösten Aufnahmeereignissen (235),
wobei die Zielerfassungseinheit (40) sich standardmässig im Zielverfolgungsmodus befindet, und der Ausrichtungserfassungsmodus benutzergesteuert anwählbar ist und eine festgelegte Zeitspanne dauert.

2. Lasertracker (1) nach Anspruch 1,
**gekennzeichnet durch**
• eine eine Stehachse (9) definierende Basis (140),
• eine Stütze (120), die eine im Wesentlichen orthogonal zur Stehachse (9) stehende Kippachse (8) definiert, wobei die Stütze (120) relativ zur Basis (140) um die Stehachse (9) motorisiert schwenkbar ist und ein Horizontalschwenkwinkel durch eine Ausrichtung der Stütze (120) relativ zur Basis (140) definiert wird,
• eine um die Kippachse (8) relativ zur Stütze (120) motorisiert schwenkbare Strahllenkeinheit (110), wobei ein Vertikalschwenkwinkel durch eine Ausrichtung der Strahllenkeinheit (110) relativ zur Stütze (120) definiert wird, zur Emission und Ausrichtung der Messstrahlung (30) entlang einer Emissionsachse (7) und zum Empfang von zumindest einem Teil der am Retroreflektor (81) reflektierten Messstrahlung (31), und
• Winkelmessfunktionalität zur Bestimmung des Horizontalschwenkwinkels und des Vertikalschwenkwinkels.

3. Lasertracker (1) nach einem der vorangehenden Ansprüche,
**dadurch gekennzeichnet, dass**
der Sensor (45) der Zielerfassungseinheit (40) ausgestaltet ist als ein CMOS- oder CCD-Sensor.

4. Lasertracker (1) nach einem der vorangehenden Ansprüche,
**gekennzeichnet durch**
ein optisches System der Zielerfassungseinheit (40) mit unveränderlichem Fokus und unveränderlichem Zoom, insbesondere ein Fixfokus-Objektiv aufweisend.

5. Lasertracker (1) nach einem der vorangehenden Ansprüche, wobei die Zielmarkierungen (82) des Messhilfsinstruments (80) ausgestaltet sind, Licht zu emittieren,
**gekennzeichnet durch**
Mittel zur kabellosen Kommunikation mit dem Messhilfsinstrument (80), mittels welcher der Lasertracker (1) zum Steuern eines Leuchtens der Zielmarkierungen (82) des Messhilfsinstruments (80), insbesondere zum synchronisierten Ein- und Ausschalten des Leuchtens von Zielmarkierungen (82), ausgestaltet ist, insbesondere
• zum Zwecke einer zeitlich aufeinanderfolgenden Zielverfolgung und Ausrichtungsbestimmung mittels der Zielerfassungseinheit (40), und/oder
• in Abhängigkeit von einer Entfernung zwischen dem Lasertracker (1) und dem Messhilfsinstrument (80).

6. Lasertracker (1) nach einem der vorangehenden Ansprüche,
**dadurch gekennzeichnet, dass**
der Lasertracker (1) eine gemeinsame Ein- und Ausgangsoptik (50) zum Aussenden der Messstrahlung (30), zum Einlass der reflektierten Strahlung (31) und zum Einlass der Lichtstrahlen (42) der Zielmarkierungen (82) aufweist.

7. Lasertracker (1) nach Anspruch 6,
**gekennzeichnet durch**
• eine zweite Strahlquelle (33) zur Erzeugung einer Zielverfolgungsstrahlung (32) und
• Strahllenkmittel (34, 36, 37) zum im wesentlichen koaxialen Aussenden der Messstrahlung (30) und der Zielverfolgungsstrahlung (32) durch die gemeinsame Ein- und Ausgangsoptik (50).

8. Lasertracker (1) nach Anspruch 7,
**dadurch gekennzeichnet, dass**
die Messstrahlung (30) und die Zielverfolgungsstrahlung (32) sich voneinander unterscheiden, insbesondere hinsichtlich ihrer Polarität und/oder Wellenlänge,
insbesondere wobei
• die Strahllenkmittel (34, 36, 37) derart beschaffen sind, dass ein erster Teil der reflektierten Strahlung (31) auf das Entfernungsmessmodul (38) und ein zweiter Teil der reflektierten Strahlung (31) auf den Sensor (45) der Zielerfassungseinheit (40) leitbar sind, und/oder
• vor der Zielerfassungseinheit (40) ein für die Zielverfolgungsstrahlung (32) im wesentlichen durchlässiger und für die Messstrahlung (30) im wesentlichen undurchlässiger Filter (39) bereitgestellt ist.

9. Lasertracker (1) nach einem der vorangehenden Ansprüche,
**gekennzeichnet durch**
eine Grob-Anzieleinheit (51), insbesondere mit Beleuchtungsmitteln (52), zur groben Bestimmung der Position des Messhilfsinstruments (80) und zur Erzeugung eines Ausgangssignals zur Steuerung einer Grob-Anzielfunktionalität.

10. Lasertracker (1) nach einem der vorangehenden Ansprüche,
**gekennzeichnet durch**
• eine Übersichtskamera (58), insbesondere mit Beleuchtungsmitteln (59), zum Aufnehmen von Bildern der Messumgebung, und insbesondere
• eine Anzeigeeinheit zum Anzeigen von Bildern der Übersichtskamera (59) und/oder von Informationen über durchgeführte Messungen und den Gerätezustand.

11. Lasertracker-System, aufweisend einen Lasertracker (1) nach einem der vorangehenden Ansprüche und ein Messhilfsinstrument (80), das einen Retroreflektor (81) und eine Vielzahl von Zielmarkierungen (82), aufweist, wobei die Zielmarkierungen (82) in bekannter fixer räumlicher Verteilung auf dem Messhilfsinstrument (80) angeordnet sind, und ausgestaltet sind,
Lichtstrahlen (42) zu emittieren oder zu reflektieren, und wobei das Lasertracker-System ausserdem Mittel zur kabellosen Kommunikation zwischen dem Lasertracker (1) und dem Messhilfsinstrument (80) aufweist zum Steuern eines Leuchtens der Zielmarkierungen (82), insbesondere zum synchronisierten Ein- und Ausschalten des Leuchtens von Zielmarkierungen (82) und insbesondere
• zum Zwecke einer zeitlich aufeinanderfolgenden Zielverfolgung und Ausrichtungsbestimmung mittels der Zielerfassungseinheit (40), und/oder
• in Abhängigkeit von einer Entfernung zwischen dem Lasertracker (1) und dem Messhilfsinstrument (80).

12. Verfahren zur Positionsbestimmung eines Messhilfsinstruments (80), das einen Retroreflektor (81) und eine Vielzahl Zielmarkierungen (82) aufweist, sowie insbesondere zur fortlaufenden Verfolgung des Messhilfsinstruments (80), mittels eines Lasertrackers (1), wobei die Zielmarkierungen (82) in bekannter fixer räumlicher Verteilung auf dem Messhilfsinstrument (80) angeordnet sind, und ausgestaltet sind, Lichtstrahlen (42) zu emittieren oder zu reflektieren, mit einem
• Ausrichten einer Strahlung (30, 32) emittierenden Strahllenkeinheit (110) des Lasertrackers (1) auf das Messhilfsinstrument (80),
• Aussenden einer Strahlung (30, 32) auf den Retroreflektor (81) zur Erzeugung einer reflektierten Strahlung (31),
• Empfangen der reflektieren Strahlung (31) mit einem Sensor (45) einer Zielerfassungseinheit (40), wobei der Sensor (45) als zweidimensionaler Bildsensor ausgestaltet ist,
• Bestimmen eines Auftreffpunkts (43) der reflektierten Messstrahlung (31) auf dem Sensor (45),
• Erzeugen eines Ausgangssignals zur Steuerung einer Fein-Anzielfunktionalität und einer Zielverfolgungsfunktionalität, basierend auf dem Auftreffpunkt (43),
• Empfangen der reflektierten Strahlung (31) mit einer Entfernungsmesseinheit (38),
• Bestimmen einer Entfernung zum Retroreflektor (81),
• Bestimmen einer Richtung zum Retroreflektor (81), und
• Bestimmen einer räumlichen Lage des Messhilfsinstruments (80) anhand von Lichtstrahlen (42) der Zielmarkierungen (82),
**gekennzeichnet durch**
ein Empfangen von Lichtstrahlen (42) der Zielmarkierungen (82) mit dem Sensor (45), wobei das Bestimmen der räumlichen Lage des Messhilfsinstruments (80) vermittels eines Bestimmens von Positionen der Auftreffpunkte (44) der Zielmarkierungen (82) auf dem Sensor (45) erfolgt, wobei die Zielerfassungseinheit (40) einen Zielverfolgungsmodus zur Bestimmung des Auftreffpunkts (43) der reflektierten Strahlung (31) auf dem Sensor (45) und einen Ausrichtungserfassungsmodus zur Bestimmung der Verteilung der Auftreffpunkte (44) der Lichtstrahlen (42) auf dem Sensor (45) aufweist, wobei der Ausrichtungserfassungsmodus eine Messsequenz (230) umfasst mit durch einen elektronischen Shutter des Sensors (45) ausgelösten Aufnahmeereignissen (235), und wobei die Zielerfassungseinheit (40) sich standardmässig im Zielverfolgungsmodus befindet, und der Ausrichtungserfassungsmodus benutzergesteuert angewählt wird und eine festgelegte Zeitspanne dauert.

13. Verfahren nach Anspruch 12,
**dadurch gekennzeichnet, dass**
das Ausrichten der Strahllenkeinheit (110) auf das Messhilfsinstrument (80) mittels einer von einem Ausgangssignal einer Grob-Anzieleinheit (51) gesteuerten Anzielfunktionalität erfolgt, wobei das Verfahren aufweist
• ein Beleuchten des Messhilfsinstruments (80) durch Beleuchtungsmittel (52) der Grob-Anzieleinheit (51) zur Erzeugung einer Reflexion durch den Retroreflektor (81),
• ein Empfangen der Reflexion durch die Grob-Anzieleinheit (51), und
• ein grobes Bestimmen der Position des Messhilfsinstruments (80) basierend auf der Reflexion, und
ein Erzeugen des Ausgangssignals zur Steuerung der Anzielfunktionalität, basierend auf der groben Position des Messhilfsinstruments (80).

14. Verfahren nach Anspruch 12 oder Anspruch 13,
**dadurch gekennzeichnet, dass**
das Empfangen der reflektierten Strahlung (31) mit dem Sensor (45), und das Empfangen der Lichtstrahlen (42) sequentiell erfolgen, insbesondere wobei das Aussenden der Strahlung (30, 32) und ein Aussenden von Lichtstrahlen (42) der Zielmarkierungen (82) aufeinander abgestimmt abwechselnd erfolgen.

## Claims

1. Laser tracker (1) for determining the position of an auxiliary measuring instrument (80) that has a retroreflector (81) and a multiplicity of target markings (82), and also for continuously tracking the auxiliary measuring instrument (80), wherein the target markings (82) are arranged in a known fixed spatial distribution on the auxiliary measuring instrument (80) and are embodied to emit or reflect light beams (42), and wherein the laser tracker (1) has
• a first radiation source (35) for producing measurement radiation (30),
• a distance measuring module (38) having distance measuring functionality, and
• a target sensing unit (40) for determining an impingement point (43) for radiation (31) reflected by the retroreflector (81) on a sensor (45) of the target sensing unit (40) and for producing an output signal in order to control a fine targeting functionality and a target tracking functionality, wherein the sensor (45) of the target sensing unit (40) is embodied as a two-dimensional image sensor,
**characterized in that**
the target sensing unit (40) is embodied
• to determine impingement points (44) for light beams (42) reflected or emitted by a multiplicity of target markings (82) of the auxiliary measuring instrument (80) on the sensor (45), and
• to determine the spatial orientation of the auxiliary measuring instrument (80) on the basis of the distribution of the impingement points (44) of the light beams (42),
wherein the target sensing unit (40) has a target tracking mode and an orientation sensing mode, wherein the target sensing unit (40)
• in the target tracking mode is embodied to determine the impingement point (43) of the reflected radiation (31) on the sensor (45) of the target sensing unit (40) and to produce the output signal in order to control the fine targeting functionality and the target tracking functionality, and
• in the orientation sensing mode is embodied to determine the distribution of the impingement points (44) of the light beams (42) on the sensor (45) of the target sensing unit (40) and, on the basis thereof, to determine the spatial orientation of the auxiliary measuring instrument (80), wherein the orientation sensing mode comprises a measurement sequence (230) with recording events (235) that are triggered by an electronic shutter of the sensor (45),
wherein the target sensing unit (40) is in the target tracking mode as standard, and the orientation sensing mode can be dialed in under user control and lasts a stipulated period of time.

2. Laser tracker (1) according to Claim 1,
**characterized by**
• a base (140) that defines a vertical axis (9),
• a support (120) that defines a tilt axis (8) that is essentially at right angles to the vertical axis (9), wherein the support (120) is pivotable about the vertical axis (9) relative to the base (140) in a motorized manner, and a horizontal pivot angle is defined by an orientation of the support (120) relative to the base (140),
• a beam deflection unit (110) that is pivotable about the tilt axis (8) relative to the support (120) in a motorized manner, wherein a vertical pivot angle is defined by an orientation of the beam deflection unit (110) relative to the support (120), in order to emit and orient the measurement radiation (30) along an emission axis (7) and in order to receive at least one portion of the measurement radiation (31) reflected at the retroreflector (81), and
• angle measuring functionality for determining the horizontal pivot angle and the vertical pivot angle.

3. Laser tracker (1) according to any one of the preceding claims,
**characterized in that**
the sensor (45) of the target sensing unit (40) is embodied as a CMOS or CCD sensor.

4. Laser tracker (1) according to any one of the preceding claims,
**characterized by**
an optical system of the target sensing unit (40) with unalterable focus and unalterable zoom, particularly having a fixed focus lens.

5. Laser tracker (1) according to any one of the preceding claims, wherein the target markings (82) of the auxiliary measuring instrument (80) are configured to emit light,
**characterized by**
means for wireless communication with the auxiliary measuring instrument (80), which means are used to embody the laser tracker (1) to control a radiance of the target markings (82) of the auxiliary measuring instrument (80), particularly to switch the radiance of target markings (82) on and off in a synchronized manner, particularly
• for the purpose of temporally successive target tracking and orientation determination by means of the target sensing unit (40), and/or
• on the basis of a distance between the laser tracker (1) and the auxiliary measuring instrument (80).

6. Laser tracker (1) according to any one of the preceding claims,
**characterized in that**
the laser tracker (1) has a joint input and output optical system (50) for transmitting the measurement radiation (30), for admitting the reflected radiation (31) and for admitting the light beams (42) from the target markings (82) .

7. Laser tracker (1) according to Claim 6,
**characterized by**
• a second radiation source (33) for producing a target tracking radiation (32), and
• beam deflection means (34, 36, 37) for the essentially coaxial transmission of the measurement radiation (30) and the target tracking radiation (32) by the joint input and output optical system (50) .

8. Laser tracker (1) according to Claim 7,
**characterized in that**
the measurement radiation (30) and the target tracking radiation (32) differ from one another, particularly in terms of their polarity and/or wavelength,
particularly wherein
• the beam deflection means (34, 36, 37) are of a nature such that a first portion of the reflected radiation (31) is directable onto the distance measuring module (38) and a second portion of the reflected radiation (31) is directable onto the sensor (45) of the target sensing unit (40), and/or
• provided upstream of the target sensing unit (40) there is a filter (39) that is essentially pervious to the target tracking radiation (32) and that is essentially impervious to the measurement radiation (30) .

9. Laser tracker (1) according to any one of the preceding claims,
**characterized by**
a coarse targeting unit (51), particularly having illumination means (52), for coarsely determining the position of the auxiliary measuring instrument (80) and for producing an output signal in order to control a coarse targeting functionality.

10. Laser tracker (1) according to any one of the preceding claims,
**characterized by**
• an overview camera (58), particularly having illumination means (59), for recording images of the measurement surroundings, and particularly
• a display unit for displaying images from the overview camera (59) and/or information about performed measurements and the appliance state.

11. Laser tracker system, having a laser tracker (1) according to any one of the preceding claims and an auxiliary measuring instrument (80) that has a retroreflector (81) and a multiplicity of target markings (82), wherein the target markings (82) are arranged in a known fixed spatial distribution on the auxiliary measuring instrument (80), and are embodied
to emit or reflect light beams (42), and wherein the laser tracker system furthermore has means for wireless communication between the laser tracker (1) and the auxiliary measuring instrument (80) in order to control a radiance of the target markings (82), particularly in order to switch the radiance of target markings (82) on and off in a synchronized manner, and particularly
• for the purpose of temporally successive target tracking and orientation determination by means of the target sensing unit (40), and/or
• on the basis of a distance between the laser tracker (1) and the auxiliary measuring instrument (80).

12. Method for determining the position of an auxiliary measuring instrument (80) that has a retroreflector (81) and a multiplicity of target markings (82), and also particularly for continuously tracking the auxiliary measuring instrument (80), by means of a laser tracker (1), wherein the target markings (82) are arranged in a known fixed spatial distribution on the auxiliary measuring instrument (80), and are embodied to emit or reflect light beams (42), involving
• orientation of a beam deflection unit (110) of the laser tracker (1), which beam deflection unit emits radiation (30, 32), to the auxiliary measuring instrument (80),
• transmission of a radiation (30, 32) to the retroreflector (81) in order to produce a reflected radiation (31),
• reception of the reflected radiation (31) using a sensor (45) of a target sensing unit (40), wherein the sensor (45) is embodied as a two-dimensional image sensor,
• determination of an impingement point (43) for the reflected measurement radiation (31) on the sensor (45),
• production of an output signal in order to control a fine targeting functionality and a target tracking functionality, on the basis of the impingement point (43),
• reception of the reflected radiation (31) using a distance measuring unit (38),
• determination of a distance from the retroreflector (81),
• determination of a direction to the retroreflector (81), and
• determination of a spatial location of the auxiliary measuring instrument (80) using light beams (42) from the target markings (82),
**characterized by**
reception of light beams (42) from the target markings (82) using the sensor (45), wherein the spatial location of the auxiliary measuring instrument (80) is determined by determining positions for the impingement points (44) of the target markings (82) on the sensor (45), wherein the target sensing unit (40) has a target tracking mode to determine the impingement point (43) of the reflected radiation (31) on the sensor (45) and an orientation sensing mode to determine the distribution of the impingement points (44) of the light beams (42) on the sensor (45), wherein the orientation sensing mode comprises a measurement sequence (230) with recording events (235) that are triggered by an electronic shutter of the sensor (45), and wherein the target sensing unit (40) is in the target tracking mode as standard, and the orientation sensing mode can be dialed in under user control and lasts a stipulated period of time.

13. Method according to Claim 12,
**characterized in that**
the beam deflection unit (110) is oriented to the auxiliary measuring instrument (80) by means of a targeting functionality that is controlled by an output signal from a coarse targeting unit (51), wherein the method involves
• illumination of the auxiliary measuring instrument (80) by illumination means (52) of the coarse targeting unit (51) in order to produce a reflection by the retroreflector (81),
• reception of the reflection by the coarse targeting unit (51), and
• coarse determination of the position of the auxiliary measuring instrument (80) on the basis of the reflection, and
• production of the output signal in order to control the targeting functionality, on the basis of the coarse position of the auxiliary measuring instrument (80).

14. Method according to Claim 12 or Claim 13,
**characterized in that**
the reception of the reflected radiation (31) using the sensor (45) and the reception of the light beams (42) take place sequentially, particularly wherein the transmission of the radiation (30, 32) and transmission of light beams (42) from the target markings (82) take place alternately in a manner coordinated with one another.

## Revendications

1. Laser de repérage (1) pour déterminer la position d'un instrument auxiliaire de mesure (80) qui présente un rétroréflecteur (81) et une pluralité de repères de visée (82), ainsi que pour suivre en continu l'instrument auxiliaire de mesure (80), les repères de visée (82) étant disposés selon une répartition spatiale fixe connue sur l'instrument auxiliaire de mesure (80) et conçus pour émettre ou réfléchir des rayons lumineux (42), et lequel laser de repérage (1) présente
• une première source de rayonnement (35) pour produire un rayonnement de mesure (30),
• un module de mesure de distance (38) avec une fonctionnalité de mesure de distance et
• une unité de détection de cible (40) pour déterminer un point d'impact (43) du rayonnement (31) réfléchi par le rétroréflecteur (81) sur un capteur (45) de l'unité de détection de cible (40) et pour produire un signal de sortie destiné à commander une fonctionnalité de visée fine et une fonctionnalité de suivi de cible, le capteur (45) de l'unité de détection de cible (40) étant réalisé sous la forme d'un capteur d'images bidimensionnelles,
**caractérisé en ce que**
l'unité de détection de cible (40) est conçue
• pour déterminer des points d'impact (44) d'une pluralité de rayons lumineux (42) réfléchis ou émis par des repères de visée (82) de l'instrument auxiliaire de mesure (80) sur le capteur (45), et
• pour déterminer l'orientation spatiale de l'instrument auxiliaire de mesure (80) sur la base de la répartition des points d'impact (44) des rayons lumineux (42).
l'unité de détection de cible (40) présentant un mode de suivi de cible et un mode de détection d'orientation, l'unité de détection de cible (40) étant conçue pour
• dans le mode de suivi de cible, déterminer le point d'impact (43) du rayonnement réfléchi (31) sur le capteur (45) de l'unité de détection de cible (40) et produire le signal de sortie destiné à commander la fonctionnalité de visée fine et la fonctionnalité de suivi de cible, et
• dans le mode de détection d'orientation, déterminer la répartition des points d'impact (44) des rayons lumineux (42) sur le capteur (45) de l'unité de détection de cible (40) et, sur la base de celle-ci, déterminer l'orientation spatiale de l'instrument auxiliaire de mesure (80), le mode de détection d'orientation comprenant une séquence de mesure (230) avec des événements d'acquisition (235) déclenchés par un obturateur électronique du capteur (45),
l'unité de détection de cible (40) se trouvant par défaut dans le mode de suivi de cible et le mode de détection d'orientation pouvant être sélectionné de façon commandée par l'utilisateur et durant un laps de temps défini.

2. Laser de repérage (1) selon la revendication 1,
**caractérisé par**
• une base (140) définissant un axe vertical (9),
• un support (120) qui définit un axe de basculement (8) sensiblement orthogonal à l'axe vertical (9), le support (120) pouvant pivoter de façon motorisée autour de l'axe vertical (9) par rapport à la base (140) et un angle de pivotement horizontal étant défini par une orientation du support (120) par rapport à la base (140),
• une unité de déviation de faisceau (110) pouvant pivoter de façon motorisée autour de l'axe de basculement (8) par rapport au support (120), un angle de pivotement vertical étant défini par une orientation de l'unité de déviation de faisceau (110) par rapport au support (120), pour l'émission et l'orientation du rayonnement de mesure (30) le long d'un axe d'émission (7) et pour la réception d'au moins une partie du rayonnement de mesure (31) réfléchi sur le rétroréflecteur (81), et
• une fonctionnalité de mesure d'angle pour déterminer l'angle de pivotement horizontal et l'angle de pivotement vertical.

3. Laser de repérage (1) selon l'une des revendications précédentes,
**caractérisé en ce que**
le capteur (45) de l'unité de détection de cible (40) est réalisé sous la forme d'un capteur CMOS ou CCD.

4. Laser de repérage (1) selon l'une des revendications précédentes,
**caractérisé par**
un système optique de l'unité de détection de cible (40) à foyer invariable et zoom invariable, en particulier présentant un objectif à foyer fixe.

5. Laser de repérage (1) selon l'une des revendications précédentes, dans lequel les repères de visée (82) de l'instrument auxiliaire de mesure (80) sont conçus pour émettre de la lumière,
**caractérisé par**
des moyens pour la communication sans fil avec l'instrument auxiliaire de mesure (80), au moyen desquels le laser de repérage (1) est conçu pour commander un allumage des repères de visée (82) de l'instrument auxiliaire de mesure (80), en particulier pour activer et désactiver de façon synchronisée l'allumage de repères de visée (82), en particulier
• pour un suivi de cible et une détermination d'orientation se succédant dans le temps au moyen de l'unité de détection de cible (40) et/ou
• en fonction d'une distance entre le laser de repérage (1) et l'instrument auxiliaire de mesure (80).

6. Laser de repérage (1) selon l'une des revendications précédentes,
**caractérisé en ce que**
le laser de repérage (1) présente une optique d'entrée et de sortie commune (50) pour l'émission du rayonnement de mesure (30), pour l'entrée du rayonnement réfléchie (31) et pour l'entrée des rayons lumineux (42) des repères de visée (82).

7. Laser de repérage (1) selon la revendication 6,
**caractérisé par**
• une deuxième source de rayonnement (33) pour produire un rayonnement de suivi de cible (32) et
• des moyens de déviation de faisceau (34, 36, 37) pour l'émission sensiblement coaxiale du rayonnement de mesure (30) et du rayonnement de suivi de cible (32) par l'optique d'entrée et de sortie commune (50).

8. Laser de repérage (1) selon la revendication 7,
**caractérisé en ce que**
le rayonnement de mesure (30) et le rayonnement de suivi de cible (32) diffèrent l'un de l'autre, en particulier en ce qui concerne leur polarité et/ou leur longueur d'onde, en particulier
• les moyens de déviation de faisceau (34, 36, 37) étant conçus de telle sorte qu'une première partie du rayonnement réfléchi (31) puisse être guidée sur le module de mesure de distance (38) et une deuxième partie du rayonnement réfléchi (31) sur le capteur (45) de l'unité de détection de cible (40) et/ou
• un filtre (39) sensiblement transparent au rayonnement de suivi de cible (32) et sensiblement opaque au rayonnement de mesure (30) étant prévu avant l'unité de détection de cible (40).

9. Laser de repérage (1) selon l'une des revendications précédentes,
**caractérisé par**
une unité de visée grossière (51), en particulier avec des moyens d'éclairage (52), pour déterminer grossièrement la position de l'instrument auxiliaire de mesure (80) et pour produire un signal de sortie destiné à commander une fonctionnalité de visée grossière.

10. Laser de repérage (1) selon l'une des revendications précédentes,
**caractérisé par**
• une caméra de vue d'ensemble (58), en particulier avec des moyens d'éclairage (59), pour acquérir des images de l'environnement de mesure, et en particulier
• une unité d'affichage pour afficher des images de la caméra de vue d'ensemble (59) et/ou des informations sur les mesures effectuées et l'état de l'appareil.

11. Système de laser de repérage, présentant un laser de repérage (1) selon l'une des revendications précédentes et un instrument auxiliaire de mesure (80) qui présente un rétroréflecteur (81) et une pluralité de repères de visée (82), les repères de visée (82) étant disposés selon une répartition spatiale fixe connue sur l'instrument auxiliaire de mesure (80) et conçus pour émettre ou réfléchir des rayons lumineux (42), et le système de laser de repérage présentant en outre des moyens pour la communication sans fil entre le laser de repérage (1) et l'instrument auxiliaire de mesure (80) pour commander un allumage des repères de visée (82), en particulier pour activer et désactiver de façon synchronisée l'allumage de repères de visée (82) et en particulier
• pour un suivi de cible et une détermination d'orientation se succédant dans le temps au moyen de l'unité de détection de cible (40) et/ou
• en fonction d'une distance entre le laser de repérage (1) et l'instrument auxiliaire de mesure (80).

12. Procédé pour déterminer la position d'un instrument auxiliaire de mesure (80) qui présente un rétroréflecteur (81) et une pluralité de repères de visée (82), ainsi que, en particulier, pour suivre en continu l'instrument auxiliaire de mesure (80), au moyen d'un laser de repérage (1), les repères de visée (82) étant disposés selon une répartition spatiale fixe connue sur l'instrument auxiliaire de mesure (80) et conçus pour émettre ou réfléchir des rayons lumineux (42), consistant à
• orienter une unité de déviation de faisceau (110) du laser de repérage (1) émettant un rayonnement (30, 32) sur l'instrument auxiliaire de mesure (80),
• émettre un rayonnement (30, 32) sur le rétroréflecteur (81) pour produire un rayonnement réfléchi (31 ),
• recevoir le rayonnement réfléchi (31) avec un capteur (45) d'une unité de détection de cible (40), le capteur (45) étant réalisé sous la forme d'un capteur d'images bidimensionnelles,
• déterminer un point d'impact (43) du rayonnement réfléchi de mesure (31) sur le capteur (45),
• produire un signal de sortie destiné à commander une fonctionnalité de visée fine et une fonctionnalité de suivi de cible, sur la base du point d'impact (43),
• recevoir le rayonnement réfléchi (31) avec une unité de mesure de distance (38),
• déterminer une distance par rapport au rétroréflecteur (81),
• déterminer une direction par rapport au rétroréflecteur (81) et
• déterminer une position spatiale de l'instrument auxiliaire de mesure (80) à l'aide de rayons lumineux (42) des repères de visée (82),
**caractérisé par** l'étape consistant à
recevoir des rayons lumineux (42) des repères de visée (82) avec le capteur (45), la détermination de la position spatiale de l'instrument auxiliaire de mesure (80) ayant lieu par le biais d'une détermination de positions des points d'impact (44) des repères de visée (82) sur le capteur (45),
l'unité de détection de cible (40) présentant un mode de suivi de cible pour déterminer le point d'impact (43) du rayonnement réfléchi de mesure (31) sur le capteur (45) et un mode de détection d'orientation pour déterminer la répartition des points d'impact (44) des rayons lumineux (42) sur le capteur (45), le mode de détection d'orientation comprenant une séquence de mesure (230) avec des événements d'acquisition (235) déclenchés par un obturateur électronique du capteur (45), et l'unité de détection de cible (40) se trouvant par défaut dans le mode de suivi de cible, et le mode de détection d'orientation étant sélectionné de façon commandée par l'utilisateur et durant un laps de temps défini.

13. Procédé selon la revendication 12,
**caractérisé en ce que**
l'orientation de l'unité de déviation de faisceau (110) sur l'instrument auxiliaire de mesure (80) est effectuée au moyen d'une fonctionnalité de visée commandée par un signal de sortie d'une unité de visée grossière (51), le procédé consistant à
• éclairer l'instrument auxiliaire de mesure (80) par des moyens d'éclairage (52) de l'unité de visée grossière (51) pour produire une réflexion par le rétroréflecteur (81),
• recevoir la réflexion par l'unité de visée grossière (51),
• déterminer grossièrement la position de l'instrument auxiliaire de mesure (80) sur la base de la réflexion et
• produire le signal de sortie destiné à commander la fonctionnalité de visée, sur la base de la position grossière de l'instrument auxiliaire de mesure (80).

14. Procédé selon la revendication 12 ou la revendication 13,
**caractérisé en ce que**
la réception du rayonnement réfléchi (31) avec le capteur (45) et la réception des rayons lumineux (42) ont lieu séquentiellement, en particulier l'émission du rayonnement (30, 32) et une émission de rayons lumineux (42) des repères de visée (82) ayant lieu alternativement de façon coordonnée.
